# EUROPEAN PATENT APPLICATION

(11) **EP 2 233 822 A1**
(43) Date of publication of application: **29.09.2010**
(21) Application number: 08872754.0
(22) Date of filing: 21.10.2008
(51) Int. Cl.: F21S 2/00, F21V 29/00, G02F 1/13357, F21Y 101/02

(54) **BACKLIGHT UNIT AND LIQUID CRYSTAL DISPLAY DEVICE**

(30) Priority: 28.02.2008 JP 2008047361
(71) Applicant: Sharp Kabushiki Kaisha, Osaka-shi, Osaka 545-8522 (JP)
(72) Inventor: HAMADA, Tetsuya, Osaka 545-8522 (JP)
(74) Representative: Müller-Boré & Partner Patentanwälte
(86) International application number: PCT/JP2008/069001
(87) International publication number: WO 2009/107275

(57) **Abstract**

Disclosed is a backlight unit (49) wherein a flexible pressing piece (PP) provided to a top housing unit (25) presses a mounted substrate (11) against a bottom housing unit (21) which also serves as a heat dissipating unit.

## Description

### Technical Field

The present invention relates to a backlight unit including a mounting substrate having a light-emitting element mounted thereon, and to a liquid crystal display device including such a backlight unit.

### Background Art

There have conventionally been developed various backlight units for supplying light to a liquid crystal display panel (non-luminous display panel) in a liquid crystal display device. A backlight unit generally includes a light source that emits light. For example, as shown in a sectional view in Fig. 7, a backlight unit 149 disclosed in Patent Document 1 listed below uses an LED (light-emitting diode) 112 mounted on a mounting substrate 111 as a light source. The LED 112 shines light into a light guide plate 141, and the light then travels on via a reflective sheet 142 and a stack of optical sheets 146 toward a liquid crystal display panel 159.

The light is generated by the LED 112 as it operates, and as the LED 112 operates, it heats up. The heat causes the LED 112 to deteriorate (for example, it lowers the light emission efficiency of the LED 112, and shortens the lifetime of the LED 112). The heat in the LED 112 conducts to the mounting substrate 111, the heat causing early deterioration of, and warping of, the mounting substrate 111.

To prevent such inconveniences due to heat, in the backlight unit 149 described in Patent Document 1, the mounting substrate 111 having the LED 112 mounted on it is kept in contact with a heat sink substrate 172 via a heat dissipating sheet 171. With this structure, the heat originating in the LED 112 does not remain in the LED 112 or in the mounting substrate 111 but dissipates to the heat dissipating sheet 171 and to the heat sink substrate 172.

When the backlight unit 149 is operated for a long period, however, heat dissipation via the heat dissipating sheet 171 and the heat sink substrate 172 is insufficient, possibly causing, for example, the mounting substrate 111 to warp. In the backlight unit 149 according to Patent Document 1, therefore, the LED 112 and the mounting substrate 111 are held between the light guide plate 141 and the heat sink substrate 172, and in addition the mounting substrate 111 is held between a housing 125 of the backlight unit 149 and the heat sink substrate 172.

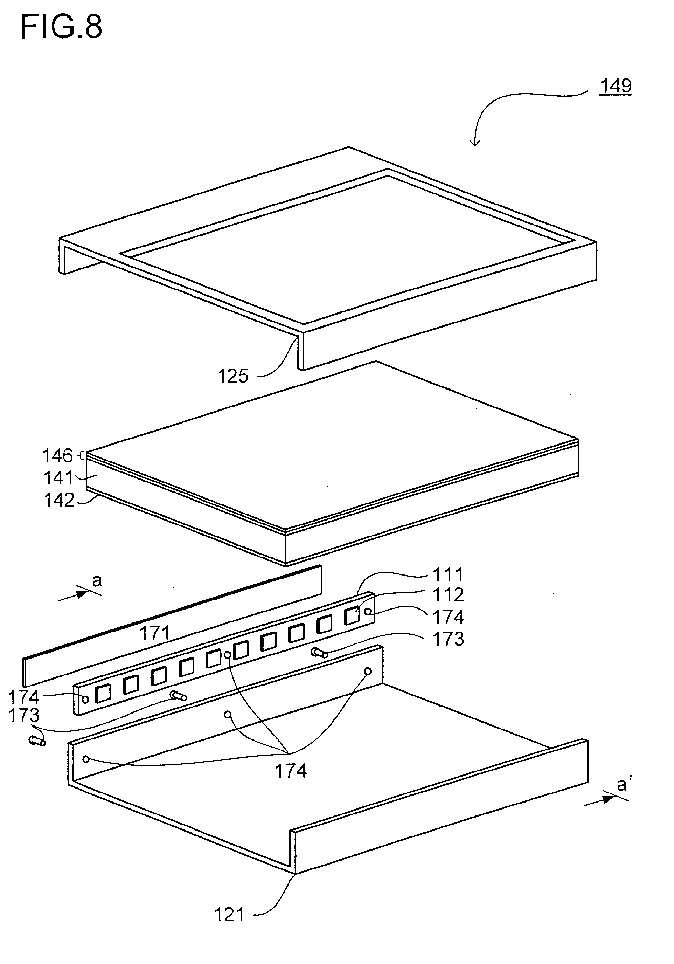

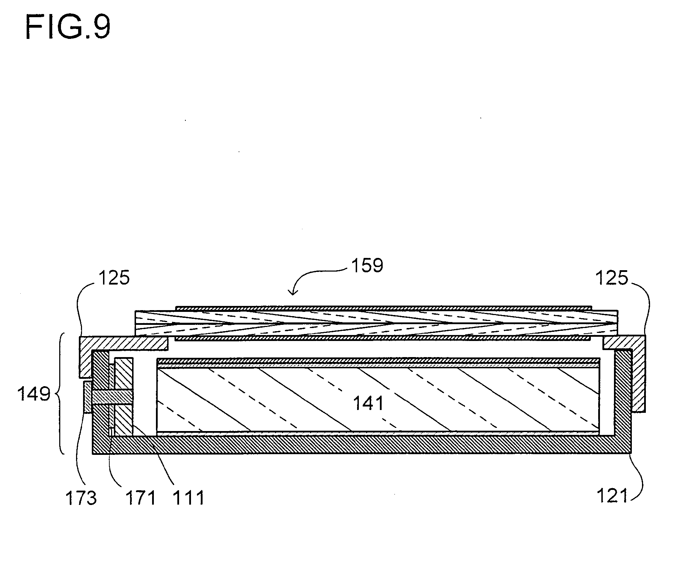

On the other hand, as shown in an exploded perspective view in Fig. 8 and a sectional view in Fig. 9, in a backlight unit 149 according to other than Patent Document 1, it is proposed that screws 173 be used to fasten a housing 121 of the backlight unit 149 to a mounting substrate 111 (Fig. 9 shows a section taken along line a-a' in Fig. 8 as viewed from the direction indicated by arrows, and additionally illustrates a liquid crystal display panel 159).
Patent Document 1: JP-A-2006-11242

### Disclosure of the Invention

### Problems to be Solved by the Invention

Inconveniently, however, in the backlight unit 149 described in Patent Document 1, the light emission face of the LED 112 needs to be kept in close contact with a side face of the light guide plate 141. This constitutes a restriction in design. For example, even if a designer wishes to take the light emission face of the LED 112 apart from a side face of the light guide plate 141 with a view to reducing variation in the amount of light (backlight) from the backlight unit 149, he cannot put the design into practice.

On the other hand, in the backlight unit 149 shown in Figs. 8 and 9, the mounting substrate 111, which includes conductors such as electrodes for the LED 112, needs to be subjected to tapping (to form threaded holes 174). In particular, in a case where the screws 173 are made of a conductive material such as metal, the tapping turns out expensive because of the need for leakage prevention.

The present invention has been devised against the background discussed above, and it is an object of the invention to provide a backlight unit that, while offering increased flexibility in arrangement of an LED, is inexpensive and easy to manufacture, and to provide a liquid crystal display device including such a backlight unit.

### Means for Solving the Problem

According to one aspect of the invention, a backlight unit comprises: a light-emitting element; a mounting substrate on which the light-emitting element is mounted; a light guide plate receiving light from the light-emitting element and transmitting the light to guide the light out of the light guide plate itself; a housing in which the light-emitting element, the mounting substrate, and the light guide plate are housed.

Moreover, in this backlight unit, the housing includes housing portions separate to hold the light guide plate therebetween, one housing portion serving as a heat dissipating portion dissipating heat occurring in the light-emitting element and in the mounting board as the light-emitting element operates, and another housing portion having a flexible pressing piece formed thereon, the pressing piece pressing the mounting substrate against the one housing portion.

With this structure, the mounting substrate having the light-emitting element mounted in it is, under the pressing force exerted by the flexible pressing piece, pressed against one housing portion serving as a heat dissipating portion (the contact between this housing portion and the mounting substrate may be direct, or indirect via another member provided between them). Thus, the heat originating in the light-emitting element does not remain in the light-emitting element or in the mounting substrate.

In addition, the pressing piece can be formed inexpensively when integrally molded with the other housing portion. This helps reduce the cost of the backlight unit. Moreover, the pressing piece holds the light-emitting element in fixed position relative to the light guide plate. This increases flexibility in the arrangement of the light-emitting element (for example, the light-emitting element no longer needs to be pressed on a side face of the light guide plate to be kept in fixed position relative to it).

It is preferable that the pressing piece press the mounting substrate against the one housing portion by making contact with the mounting surface of the mounting substrate.

With this structure, the pressing force of the pressing piece is efficiently applied to the mounting surface, and thus the non-mounting surface opposite from the mounting surface is efficiently pressed against the one housing portion.

Since the mounting substrate has a conductive wiring pattern formed on it, to prevent leakage or the like, it is preferable that the pressing piece be formed of an insulating material.

Forming the pressing piece out of an insulating material in that way makes it easy to increase the area over which it makes contact with the mounting surface on which the wiring pattern is formed. This permits the mounting substrate to be pressed stably against the one housing portion.

It is preferable that the mounting substrate be pressed by the pressing piece at positions on the plane of the substrate which are the midpoint and both ends lengthwise of the mounting substrate.

With this structure, the pressing piece can apply its pressing force to the mounting substrate evenly lengthwise. This permits the mounting substrate to be pressed more stably against the one housing portion.

It s preferable that one longer side of the mounting substrate engage with the pressing piece and the other longer side of the mounting substrate engage with the one housing portion. For example, engagement between the other longer side of the mounting substrate and the one housing portion can be achieved by forming, of first and second fit portions that fit one in the other, one in the mounting substrate and the other in the one housing portion.

With this structure, the fit between the fitting portions (first and second fitting portions) keeps the mounting board and the one housing portion in fixed position with each other. Thus, even when the mounting substrate tends to warp, it is less unlikely to come off the one housing portion.

Any type of fitting portions may be used. For example, the first fit portion may be a projection and the second fit portion an opening in which the projection fits. Needless to say, any other type of fitting portions may be adopted.

It is preferable that the fit portions (first and second fitting portions) be formed in the mounting substrate and in the one housing portion respectively at a position thereon corresponding to the position on the plane of the substrate where the mounting substrate is pressed by the pressing piece.

With this structure, the pressing piece and the fitting portions together press the mounting substrate against the one housing portion. This ensures that the mounting substrate is pressed against the one housing portion.

It is preferable that an adhesive member be provided between the non-mounting surface of the mounting substrate and the one housing portion. With this structure, the mounting substrate and the one housing portion make close contact with each other easily. Moreover, forming the adhesive member out of a high-thermal-conductivity material makes it possible to dissipate the heat in the light-emitting element.

According to another aspect of the invention, a liquid crystal display device comprises a backlight unit as described above and a liquid crystal display panel receiving light from the backlight unit.

### Advantages of the Invention

According to the present invention, the flexibility of the pressing piece applies a pressing force to the mounting substrate, which is thereby pressed against one housing portion serving as a heat dissipating portion. In this way, with a simple member like the pressing piece alone, it is possible to dissipate, easily and surely, the heat in the light-emitting element from itself and from the mounting substrate.

### Brief Description of Drawings

[Fig. 1] is an exploded perspective view of a backlight unit incorporated in a liquid crystal display device.
[Fig. 2] is a sectional view of the liquid crystal display device incorporating the backlight unit shown in Fig. 1 (showing a section taken along line A-A' in Fig. 1 as seen from the direction indicated by arrows).
[Fig. 3] is an exploded perspective view of a backlight unit different from that shown in Fig. 1.
[Fig. 4] is an exploded perspective view of a backlight unit different from those shown in Figs. 1 and 3.
[Fig. 5A] is an enlarged perspective view of part of a top-side housing portion around a pressing piece.
[Fig. 5B] is a side view of Fig. 5A.
[Fig. 5C] is a side view of a pressing piece with a bulge.
[Fig. 6] is an exploded perspective view of a backlight unit different from those shown in Figs. 1, 3, and 4.

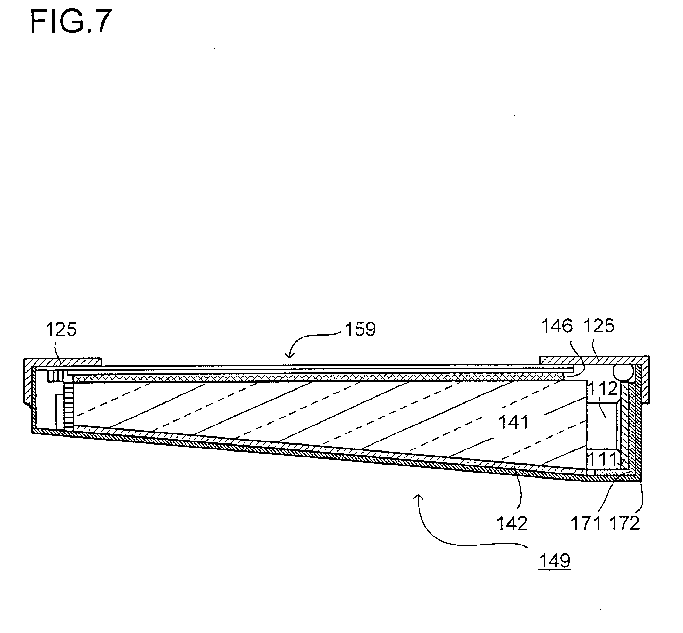

[Fig. 7] is a sectional view of a conventional liquid crystal display device.
[Fig. 8] is an exploded perspective view of a backlight unit incorporated in a conventional liquid crystal display device different from that shown in Fig. 7.
[Fig. 9] is a sectional view of the liquid crystal display device incorporating the backlight unit shown in Fig. 8 (showing a section taken along line a-a' in Fig. 8 as seen from the direction indicated by arrows).

### List of Reference Symbols

- MJ: LED module
- 11: mounting substrate
- 11a: mounting surface
- 11b: non-mounting surface
- PN: projection (first fitting portion)
- 12: LED (light-emitting element)
- BD: adhesive member
- HG: housing
- 21: bottom-side housing portion (one housing portion, heat dissipating portion)
- 22: bottom portion
- HL: opening (second fitting portion)
- 23: inner wall
- 25: top-side housing portion (other housing portion)
- PP: pressing piece
- PPr: base of pressing piece
- PPc: tip of pressing piece
- PPt: bulge
- 26: outer wall
- 27: bridge plate
- 28: passage opening
- 41: light guide plate
- 42: reflective sheet
- 43: diffusive sheet
- 44: optical sheet
- 45: optical sheet
- 49: backlight unit
- 59: liquid crystal display panel
- 69: liquid crystal display device

### Best Mode for Carrying Out the Invention

An embodiment of the present invention will be described below with reference to the accompanying drawings. For convenience' sake, hatching, reference signs, etc. may occasionally be omitted, in which case another drawing is to be referred to. A solid black dot on a drawing denotes the direction perpendicular to the plane of the page.

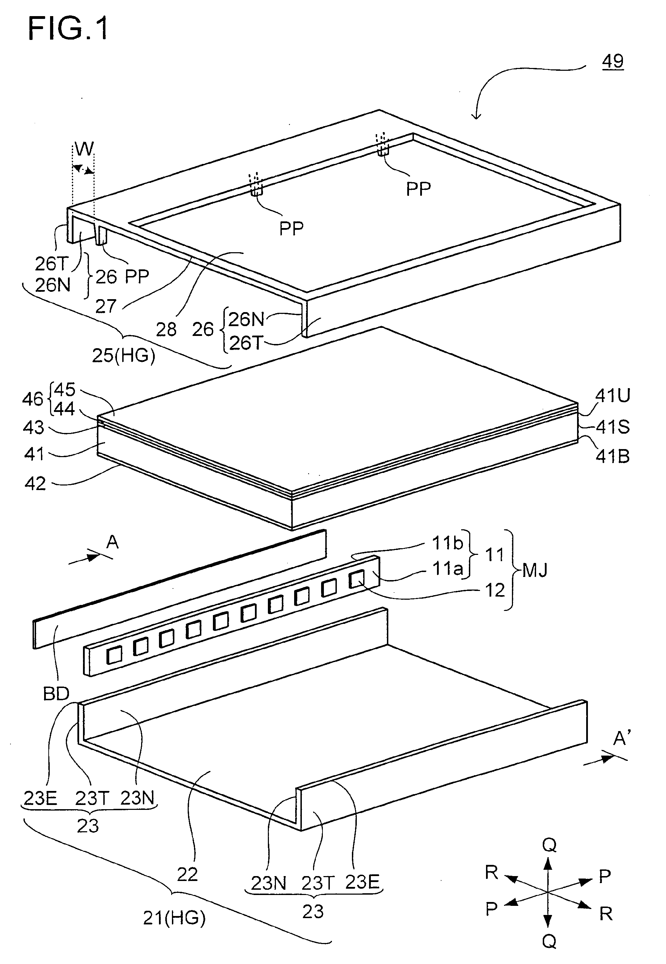

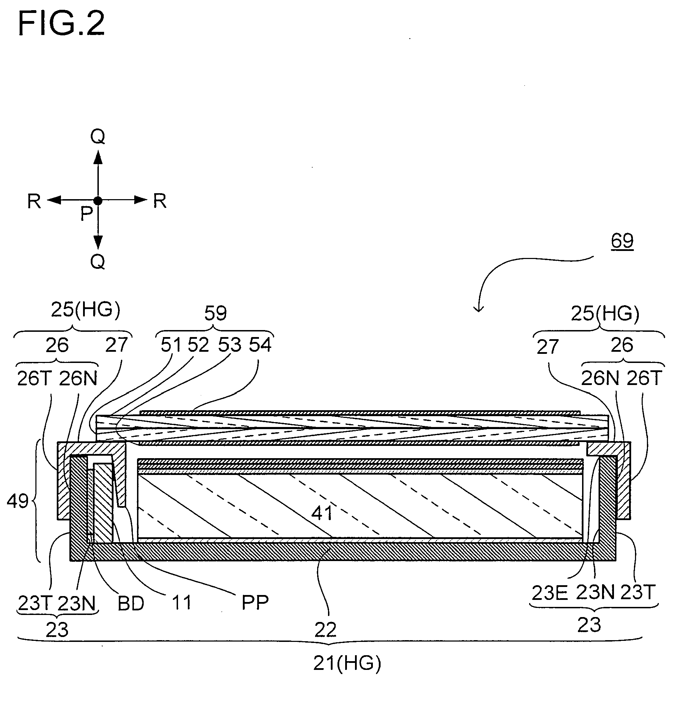

Fig. 1 is an exploded perspective view of a backlight unit 49 in a liquid crystal display device, and Fig. 2 is a sectional view of the liquid crystal display device 69 (Fig. 2 shows a section taken along line A-A' in Fig. 1 as viewed from the direction indicated by arrows). As shown in Fig. 2, the liquid crystal display device 69 includes a liquid crystal display panel 59 and the backlight unit 49.

The liquid crystal display panel 59 is composed by bonding together, with a sealing member (unillustrated), an active matrix substrate 51 including switching elements such as TFTs (thin-film transistors) and an opposite substrate 52 disposed opposite the active matrix substrate 51; the gap between the two substrate 51 and 52 is filled with liquid crystal (unillustrated) (deflecting films 53 and 54 are then fitted such that the active matrix substrate 51 and the opposite substrate 52 are held between them).

This liquid crystal display panel 59 is a non-luminous display panel, and therefore fulfils its displaying function by receiving light (backlight) from the backlight unit 49. Accordingly, uniformly irradiating the entire surface of the liquid crystal display panel 59 with the light from the backlight unit 49 will enhance the display quality of the liquid crystal display panel 59.

To generate backlight, the backlight unit 49 includes an LED module (light source module) MJ, a light guide plate 41, a reflective sheet 42, a diffusive sheet 43, optical sheets 44 and 45, and a housing HG.

The LED module MJ is a module that emits light; it includes a mounting substrate (supporting substrate) 11, and an LED (light-emitting diode) 12 mounted on electrodes on the mounting substrate 11 to receive electric current with which to emit light.

To obtain a sufficient amount of light, it is preferable that the LED module MJ include a plurality of LEDs (light-emitting elements, point light sources) 12, and moreover it is preferable that those LEDs 12 be arrayed in a row. In the drawings, however, for convenience' sake, not all of the LEDs 12 are shown (hereinafter, the direction in which the LEDs 12 are arrayed will be referred to as the array direction P).

The light guide plate 41 is a plate-shaped member having side faces 41S, and a top face 41U and a bottom face 41B so located that the side faces 41S lie between them. One of the side faces 41S (the light entrance face) faces the light emission face of the LEDs 12 to receive light from them. The received light is mixed inside the light guide plate 41 so as to emerge from the top face 41U as planar light.

The reflective sheet 42 is located so as to be covered by the light guide plate 41. The face of the reflective sheet 42 facing the bottom face 41B of the light guide plate 41 is a reflective surface. This reflective surface reflects the light from the LEDs 12 and the light propagating inside the light guide plate 41 back into the light guide plate 41 without leakage (specifically, through the bottom face 41B of the light guide plate 41).

The diffusive sheet 43 is located so as to cover the top face 41U of the light guide plate 41, and diffuses the planar light from the light guide plate 41 so that the light shines the entire area of the liquid crystal display panel 59 (the diffusive sheet 43 and the optical sheets 44 and 45 will also be collectively referred to as "the stack of optical sheets 46").

The optical sheets 44 and 45 are optical sheets that have, for example, a shape of prisms on their sheet surface so as to deflect light by affecting its radiating properties; the optical sheets 44 and 45 are located so as to cover the diffusive sheet 43. Thus, the optical sheets 44 and 45 converge the light from the diffusive sheet 43 and thereby increases its luminance. The directions in which the light converged by the optical sheets 44 and 45 respectively diverge are in a mutually crossing relationship.

The housing HG includes a bottom-side housing portion (one housing portion, heat-dissipating portion) 21 in a shape of a bottomed box, and a top-side housing portion (the other housing portion) 25 in a shape of a lid covering the bottom-side housing portion 21. The bottom-side housing portion 21 houses the LED module MJ, the reflective sheet 42, the light guide plate 41, the diffusive sheet 43, the optical sheets 44 and 45, etc.

Specifically, the reflective sheet 42, the light guide plate 41, the diffusive sheet 43, the optical sheets 44 and 45 are stacked in this order, and are housed in the bottom-side housing portion 21 (hereinafter, the direction in which these members are stacked will be referred to as the stack direction Q, and the direction perpendicular both to the array direction P of the LEDs 12 and to the stack direction Q will be referred to as the direction R).

The bottom-side housing portion 21 includes a bottom portion 22 supporting the housed members (such as the light guide plate 41) and inner walls 23 erect from the bottom portion 22. The bottom-side housing portion 21 is formed of a comparatively high-heat-dissipation material such as metal.

The inner walls 23 (specifically the inner faces 23N of the inner walls 23) of the bottom-side housing portion 21 either make direct contact, or make indirect contact via an adhesive member BD, with the bottom face (non-mounting surface 11b) of the mounting substrate 11. Accordingly, as the LEDs 12 operate, the heat in the LEDs 12 and in the mounting substrate 11 dissipates via the bottom-side housing portion 21 (the following description discusses an example where an inner wall 23 makes contact with the mounting substrate 11 via the adhesive member BD).

For such heat dissipation to take place, however, it needs to be ensured that the inner wall 23 of the bottom-side housing portion 21 and the mounting substrate 11 are in contact (be it direct or indirect) with each other. Preferable structures for achieving that will now be described.

Specifically, it is preferable that the top-side housing portion 25 be structured as follows. The top-side housing portion 25 includes outer walls 26 that make contact with the outer faces 23T of the inner walls 23, and a bridge plate 27 that bridges between those outer walls 26 (the bridge plate 27 includes a passage opening 28 to let light pass through).

When the top-side housing portion 25 is placed over the bottom-side housing portion 21, the bridge plate 27 in the top-side housing portion 25 is supported by the top ends 23E of the inner walls 23 in the bottom-side housing portion 21, and the inner faces 26N of the outer walls 26 in the top-side housing portion 25 make contact with the outer faces 23T of the inner walls 23 in the bottom-side housing portion 21. In this way, the top-side housing portion 25 engages with the bottom-side housing portion 21, and is thereby held in fixed position.

Moreover, the top-side housing portion 25 has a flexible pressing piece PP formed on it. The pressing piece PP projects from one side of the bridge plate 27, a predetermined distance away from an outer wall 26, in the same direction as the outer walls 26 extend, so as to thereby produce an interval W in which other members can be held (here, the width of the interval W varies with the position of one lengthwise end of the pressing piece PP).

The members held in the interval W are an inner wall 23 of the bottom-side housing portion 21, the adhesive member BD, and the LED module MJ's mounting substrate 11. Accordingly, the width of the interval W (as measured at its smallest part) is slightly smaller than the sum of the thickness of the inner wall 23 of the bottom-side housing portion 21, the thickness of the adhesive member BD and the thickness of the mounting substrate 11.

The pressing piece PP thus makes contact with the mounting substrate 11, and therefore the pressing piece PP is formed at such a position as not to face the LEDs 12 on the mounting substrate 11 when the top-side housing portion 25 is placed over the bottom-side housing portion 21. Any number of such pressing pieces PP may be formed; for example, as shown in Fig. 1, a plurality of pressing pieces PP are formed on the top-side housing portion 25.

With this structure, when the top-side housing portion 25 is placed over the bottom-side housing portion 21 having the LED module MJ fitted to it, then, of the inner wall 23 of the bottom-side housing portion 21 and the LED module MJ's mounting substrate 11 which are adjacent to each other via the adhesive member BD, on one hand, the outer face 23T of the inner wall 23 makes contact with the inner face 26N of an outer wall 26 in the top-side housing portion 25 and, on the other hand, a mounting surface 11a of the mounting substrate 11 makes contact with the pressing piece PP on the top-side housing portion 25.

Specifically, when pressed on the mounting substrate 11, the pressing piece PP bends toward the passage opening 28 in the bridge plate 27, and thereby widen the interval W. In this interval W, the inner wall 23 of the bottom-side housing portion 21, the adhesive member BD, and the LED module MJ's mounting substrate 11 fit. With its elastic force (pressing force), the flexible pressing piece PP presses the mounting substrate 11 and the adhesive member BD against the outer wall 26.

With this structure, for example, even if, as a result of a long period of use, the adhesion of the adhesive member BD weakens, the mounting substrate 11 warps off the adhesive member BD, and the mounting substrate 11 tends to come off the inner wall 23 of the bottom-side housing portion 21, the mounting substrate 11 is pressed back against the inner wall 23 by the pressing piece PP. This ensures that the heat in the LEDs 12 and in the mounting substrate 11 dissipates to the inner wall 23. Thus, the LEDs 12 do not deteriorate by heat, and can operate for a long period; the mounting substrate 11 too is less prone to deterioration due to heat in it.

The pressing piece PP can be formed inexpensively when integrally molded with the top-side housing portion 25, which is formed of resin. Moreover, forming the pressing piece PP out of resin makes it easy to increase the area over which it makes contact with the mounting surface having a conductive wiring pattern formed on it (for example, the pressing piece PP can be made longer). This permits the mounting substrate 11 to be pressed stably against the inner wall 23 of the bottom-side housing portion 21.

In addition, providing the pressing piece PP eliminates the need to hold the LEDs 12, for example, with a side face 41S of the light guide plate 41 for the purpose of holding the LED module MJ in fixed position. This increases flexibility in the arrangement of the LEDs 12.

Moreover, since the pressing piece PP presses on the mounting surface 11a of the mounting substrate 11, the non-mounting surface 11b opposite from the mounting surface 11 a efficiently makes close contact with the adhesive member BD, and hence is pressed against the inner wall 23 of the bottom-side housing portion 21. In addition, being flexible, the pressing piece PP, with its elastic force, stably presses the mounting substrate 11 against the inner wall 23.

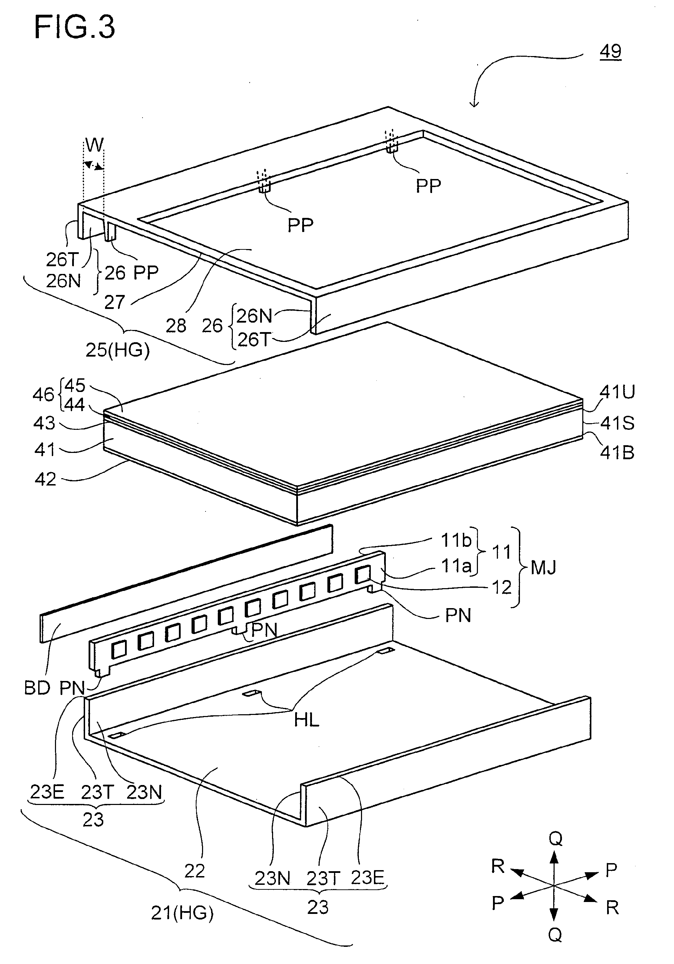

It is more preferable that the mounting substrate 11 be held in fixed position by being engaged with the bottom-side housing portion 21. For example, as shown in Fig. 3, on the edge of the mounting substrate 11 facing the inner face 23N of the inner wall 23 in the bottom-side housing portion 21 (in particular, on the edge facing the bottom portion 22 of the bottom-side housing portion 21), a projection PN is formed and, in a part of the bottom portion 22 of the bottom-side housing portion 21 facing that projection PN, an opening HL is formed so that the projection PN fits in it.

With this structure, the projection PN (first fit portion) on the mounting substrate 11 fits in the opening HL (second fit portion) in the bottom portion 22 in the bottom-side housing portion 21, and this makes the mounting substrate 11 less prone to warping. Thus, the mounting substrate 11 becomes less likely to come off the inner wall 23 of the bottom-side housing portion 21.

In particular, with the pressing piece PP on the top-side housing portion 25 pressing the mounting substrate 11 against the bottom-side housing portion 21 (specifically, the inner wall 23), and in addition with the projection PN on the mounting substrate 11 fit into the opening HL in the bottom portion 22 in the bottom-side housing portion 21, one longer side of the mounting substrate 11 engages with the top-side housing portion 25, and the other longer side of the mounting substrate 11 engages with the bottom-side housing portion 21. Thus, the mounting substrate 11 is less prone to warping, and is less likely to come off the inner wall 23 of the bottom-side housing portion 21. This ensures that the heat in the LEDs 12, and also the heat in the mounting substrate 11, dissipates via the adhesive member BD and the inner wall 23.

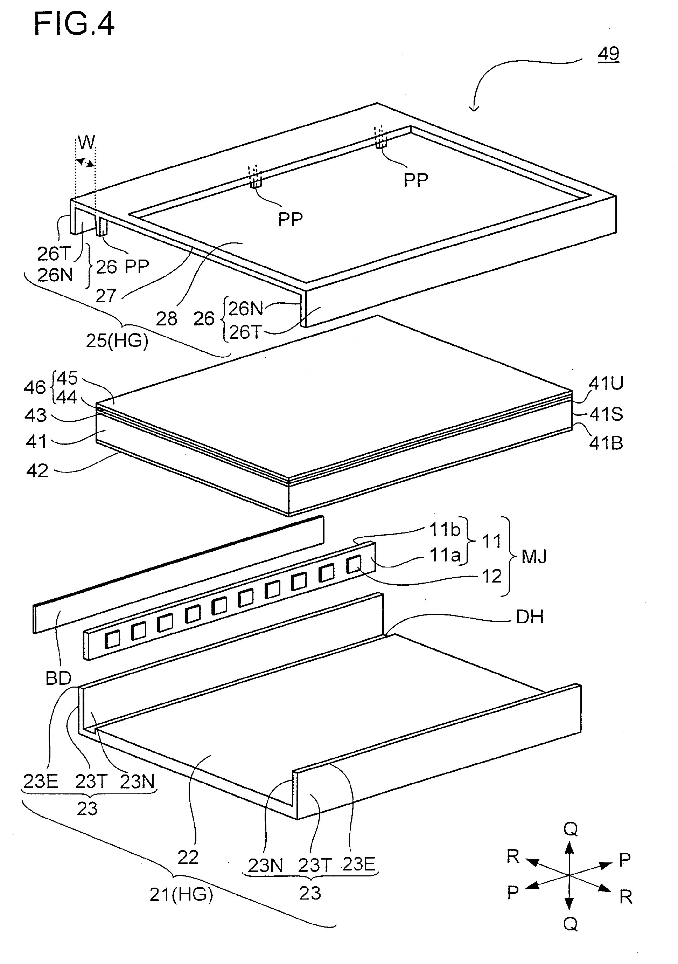

As another example of how the mounting substrate 11 is held in fixed position by being engaged with the bottom-side housing portion 21, a structure as shown in Fig. 4 may be adopted instead of that shown in Fig. 3. Specifically, the bottom-side housing portion 21 may have a groove DH formed in it in which to hold an edge of the LED module MJ's mounting substrate 11 (for example, one longer-side edge of the mounting substrate 11).

Also with this structure, one longer side of the mounting substrate 11 engages with the top-side housing portion 25, and the other longer side of the mounting substrate 11 engages with the bottom-side housing portion 21. Thus, the mounting substrate 11 is less prone to warping, and is less likely to come off the inner wall 23 of the bottom-side housing portion 21.

### [Modifications and Variations]

The present invention may be carried out in any other manners than specifically described as an embodiment above, with many modifications and variations made without departing from the spirit of the invention.

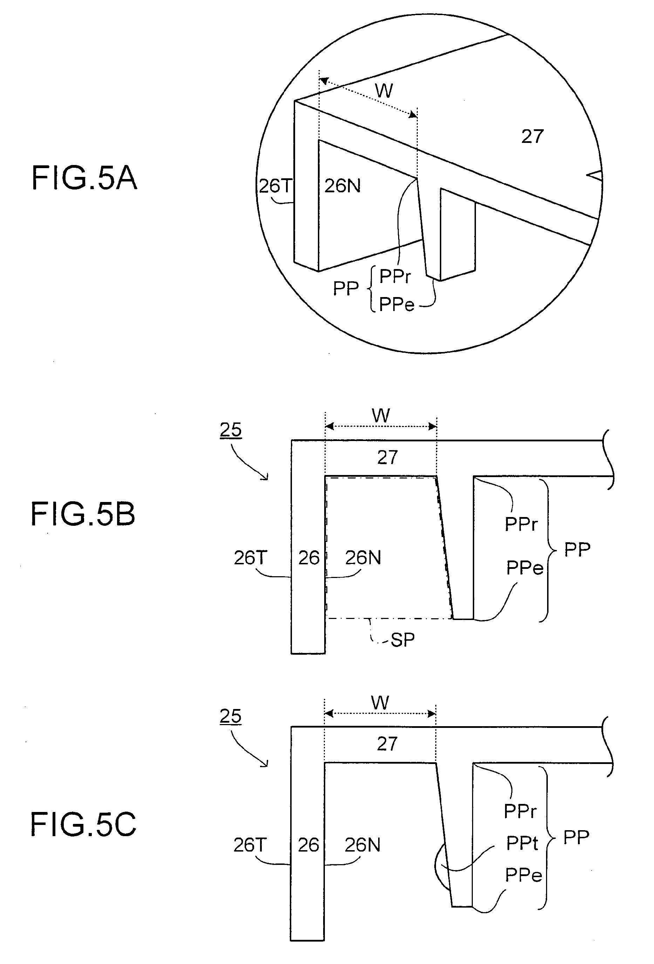

For example, as shown in Fig. 5A (an enlarged view of part of Fig. 1) and in Fig. 5B (a side view of part of Fig. 5A), it is preferable that the space SP surrounded by the pressing piece PP, the bridge plate 27, and the outer wall 26 in the top-side housing portion 25 be one increasingly wide away from the bridge plate 27. Specifically, as shown in Fig. 5B, it is preferable that the interval W from the pressing piece PP to the outer wall 26 is increasingly wide away from the bridge plate 27.

While the width of the interval W from the base PPr of the pressing piece PP to the outer wall 26 is made slightly smaller than the sum of the thickness of the inner wall 23 of the bottom-side housing portion 21, the thickness of the adhesive member BD, and the thickness of the mounting substrate 11, the width of the interval W from the tip PPe of the pressing piece PP to the outer wall 26 is greater than the sum of those thicknesses. This makes it easy to fit the inner wall 23 of the bottom-side housing portion 21, the adhesive member BD, and the LED module MJ's mounting substrate 11 into the interval W between the pressing piece PP and the outer wall 26.

The space SP mentioned above is formed, for example as shown in Figs. 5A and 5B, by making the pressing piece PP taper down toward its tip PPe. Specifically, the space SP is formed by giving the face of the pressing piece PP facing the inner face 26N of the outer wall 26 an inclination such as to be increasingly distant from the inner face 26N toward the tip PPe.

As shown in Fig. 5C, a hemispherical bulge PPt may be formed on the face of the pressing piece PP facing the outer wall 26. With this structure, the bulge PPt makes smooth contact with the mounting substrate 11 and does not damage it. Moreover, the bulge PPt slightly narrows the interval between the pressing piece PP and the outer wall 26, and thereby increases the force with which the pressing piece PP presses the mounting substrate 11 against the inner wall 23. This makes the mounting substrate 11 still less likely to come off the inner wall 23.

It is preferable that, as shown in Figs. 1, 3, and 4, the mounting substrate 11 be pressed by pressing pieces PP at positions on the plane of the substrate which are the midpoint and both ends lengthwise of the mounting substrate 11.

Pressing the mounting substrate 11 with pressing pieces PP at three points on the plane of the substrate in that way allows the mounting substrate 11 to be pressed efficiently (a pressing force is applied to the mounting substrate 11 evenly lengthwise). This efficiently prevents warping of the mounting substrate 11.

It is preferable that projections PN and openings HL be formed on the mounting substrate 11 and in the bottom portion 22 of the bottom-side housing portion 21, respectively, at positions on them corresponding to the positions on the plane of the substrate where the mounting substrate 11 is pressed by the pressing pieces PP.

For example, as shown in Fig. 3, it is preferable that each pressing piece PP is aligned with the corresponding fit portions (a projection PN and an opening HL) in the direction in which the reflective sheet 42, the light guide plate 41, the diffusive sheet 43, and the optical sheets 44 and 45 are stacked (the stack direction Q). With this structure, both longer sides of the mounting substrate 11 are efficiently pressed against the inner wall 23 of the bottom-side housing portion 21. This makes the mounting substrate 11 further less likely to come off the inner wall 23.

Pressing pieces PP and fit portions may be arranged in any other manner than specifically described above. For example, pressing pieces PP may be so located as to press an edge of the mounting substrate 11 at a position between projections PN.

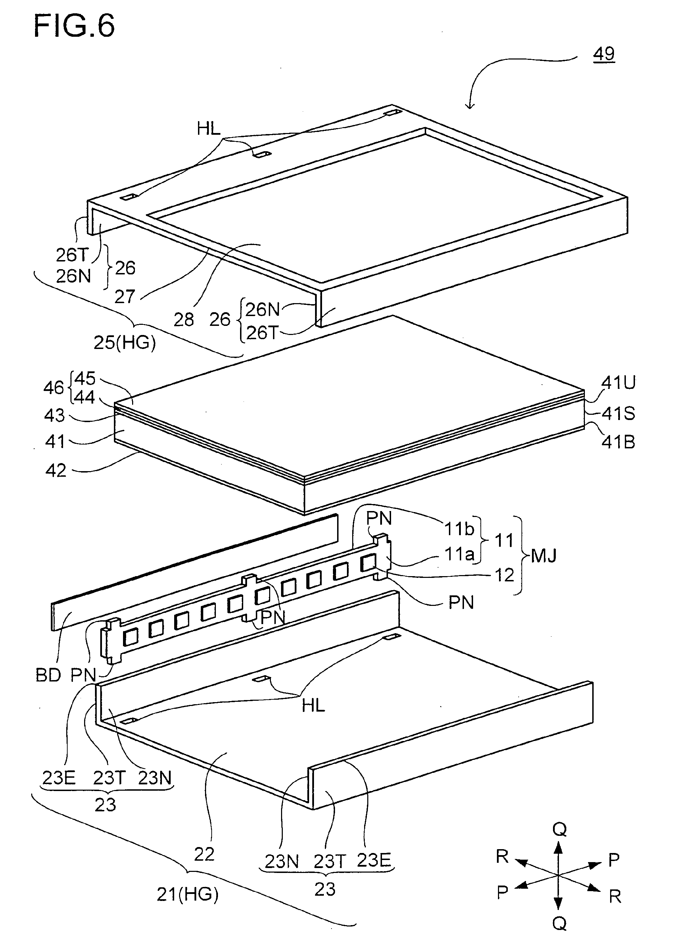

In the above description, a pressing piece PP is used to keep the mounting substrate 11 in close contact with the inner wall 23 of the bottom-side housing portion 21. Such a pressing piece PP may be omitted. This applies, for example, in a case where, as shown in Fig. 6, a projection PN is formed on the edge of the mounting substrate 11 facing the top-side housing portion 25, and also an opening HL in which the projection PN fits is formed in the bridge plate 27 of the top-side housing portion 25.

Also with this structure, one longer side of the mounting substrate 11 engages with the top-side housing portion 25, and the other longer side engages with the bottom-side housing portion 21. Thus, the mounting substrate 11 is less prone to warping, and is less likely to come off the inner wall 23 of the bottom-side housing portion 21. This ensures that the heat in the LEDs 12, and also the heat in the mounting substrate 11, dissipates via the adhesive member BD and the inner wall 23.

In the above description, the adhesive member BD lies between the non-mounting surface 11b of the mounting substrate 11 and the bottom-side housing portion 21, but this is optional. Even so, providing the adhesive member BD between the non-mounting surface 11b of the mounting substrate 11 and the bottom-side housing portion 21 makes the mounting substrate 11 still less likely to come off the bottom-side housing portion 21. Moreover, it is preferable that the adhesive member BD be formed of a high-thermal-conductivity material, because it then allows more efficient heat dissipation.

In the above description, the projection PN is formed on the mounting substrate 11, and the opening HL is formed in the housing HG (the bottom-side housing portion 21 and the top-side housing portion 25), but they may be provided otherwise. For example, a projection PN may be formed on the housing HG (the bottom-side housing portion 21 and the top-side housing portion 25), and the opening HL on the mounting substrate 11.

The engagement between the mounting substrate 11 and the housing HG may be achieved otherwise than by the projection PN fitting in the opening HL. Any other type of fitting portions may be adopted.

## Claims

1. A backlight unit comprising:
a light-emitting element;
a mounting substrate on which the light-emitting element is mounted;
a light guide plate receiving light from the light-emitting element and transmitting the light to guide the light out of the light guide plate itself;
a housing in which the light-emitting element, the mounting substrate, and the light guide plate are housed,
the housing including housing portions separate to hold the light guide plate therebetween,
one housing portion serving as a heat dissipating portion dissipating heat occurring in the light-emitting element and in the mounting board as the light-emitting element operates, and
another housing portion having a flexible pressing piece formed thereon, the pressing piece pressing the mounting substrate against the one housing portion.

2. The backlight unit according to claim 1,
wherein the pressing piece presses the mounting substrate against the one housing portion by making contact with a mounting surface of the mounting substrate.

3. The backlight unit according to claim 2,
wherein the pressing piece is formed of an insulating material.

4. The backlight unit according to claim 1,
wherein the mounting substrate is pressed by the pressing piece at positions on a plane of the substrate which are a midpoint and both ends lengthwise of the mounting substrate.

5. The backlight unit according to claim 1,
wherein one longer side of the mounting substrate engages with the pressing piece, and another longer side of the mounting substrate engages with the one housing portion.

6. The backlight unit according to claim 5,
wherein, of first and second fit portions that fit one in the other, one is formed in the mounting substrate and the other is formed in the one housing portion.

7. The backlight unit according to claim 6,
wherein the first fit portion is a projection and the second fit portion is an opening in which the first fit portion fits.

8. The backlight unit according to claim 6,
wherein the fit portions are formed in the mounting substrate and in the one housing portion respectively at a position thereon corresponding to a position on the plane of the substrate where the mounting substrate is pressed by the pressing piece.

9. The backlight unit according to claim 1,
wherein an adhesive member is provided between a non-mounting surface of the mounting substrate and the one housing portion.

10. A liquid crystal display device comprising the backlight unit according to any one of claims 1-9 and a liquid crystal display panel receiving light from the backlight unit.
